Europäisches Patentamt

European Patent Office

Office européen des brevets

(11) Numéro de publication: **0 424 237 A1**

# DEMANDE DE BREVET EUROPEEN

(21) Numéro de dépôt: 90402885.9

(22) Date de dépôt: 16.10.90

(51) Int. Cl.⁵: **H04N 5/18, H04N 5/217**

(30) Priorité: 17.10.89 FR 8913537

(43) Date de publication de la demande:
24.04.91 Bulletin 91/17

(84) Etats contractants désignés:
DE FR GB

(71) Demandeur: THOMSON-CSF
51, Esplanade du Général de Gaulle
F-92800 Puteaux(FR)

(72) Inventeur: Deblock, Jean-Marie
THOMSON-CSF SCPI Cédex 67
F-92045 Paris la Défense(FR)
Inventeur: Baudry, Jean-Claude
THOMSON-CSF SCPI Cédex 67
F-92045 Paris la Défense(FR)

(74) Mandataire: Turlèque, Clotilde et al
THOMSON-CSF SCPI
F-92045 PARIS LA DEFENSE CEDEX 67(FR)

(54) **Procédé et dispositif permettant de compenser la variation d'un niveau de tension de référence dans un dispositif à transfert de charges.**

(57) Procédé consistant à échantillonner le signal de sortie d'un capteur d'images du type dispositif à transfert de charges (DTC) avec une constante de temps d'échantillonnage plus grande pendant la période de suppression ligne que pendant la période de suppression trame, en faisant varier le rapport cyclique de la commande d'échantillonnage.

FIG.4

# PROCEDE ET DISPOSITIF PERMETTANT DE COMPENSER LA VARIATION D'UN NIVEAU DE TENSION DE REFERENCE DANS UN DISPOSITIF A TRANSFERT DE CHARGES

La présente invention concerne un procédé pour compenser la variation d'un niveau de tension de référence dans un capteur d'images du type dispositif à transfert de charges noté DTC (en anglais CCD), et un dispositif pour la mise en oeuvre de ce procédé.

Pour des raisons diverses telles que translation de potentiel continu et/ou instabilité en température, dans une chaîne vidéo, il y a toujours une ou plusieurs liaisons capacitives. Après une liaison capacitive, la composante continue du signal électrique disparaît ce qui provoque des fluctuations du niveau de référence d'obscurité électrique, ou niveau de noir, du signal vidéo, autour de sa valeur moyenne.

Pour les capteurs d'images comportant une zone image dans laquelle sont créées des charges électriques pendant une période correspondant à une trame, et une zone mémoire dans laquelle sont transférées les charges à chaque fin de trame, les fluctuations du niveau de noir sont en outre provoquées par des charges électriques générées par agitation thermique dans la zone image et dans la zone mémoire.

Ces charges donnent naissance à un signal d'obscurité qui est proportionnel au temps de stockage des charges dans le capteur et qui croît exponentiellement avec la température.

Le signal d'obscurité n'est pas le même pour les dispositifs du type transfert de trame où la zone mémoire et la zone image sont juxtaposées et ceux du type transfert interligne où la zone mémoire et la zone image sont imbriquées colonne par colonne. Ainsi, le signal d'obscurité des capteurs à transfert interligne est constant, pendant toute la durée d'une trame par exemple pour une trame de durée 20ms, il correspond à un temps de stockage égal à 40ms, alors que le signal d'obscurité des capteurs à transfert de trame varie au cours d'une même trame, par exemple, pour une trame de durée 20ms, il correspond à un temps de stockage de 20ms au début de la trame et 40ms à la fin.

Cette composante s'ajoute au signal utile et dé grade le contraste d'image.

Dans l'art antérieur, pour restituer la composante continue du signal vidéo, le niveau de référence d'obscurité du signal vidéo est ramené à une tension fixe, ou tension de noir, correspondant à la tension que délivre le capteur DTC en l'absence de toute illumination.

Pour obtenir une référence d'obscurité du signal vidéo, dans un capteur DTC, en chaque début de ligne, il y a des éléments d'images (en anglo-saxon, pixels) masqués qui ne reçoivent aucune lumière et qui servent de références de noir.

Le niveau de noir est échantillonné à des instants fugitifs $t_N$ correspondant aux instants de lecture du signal délivré par les éléments d'images masqués, et mémorisé pour servir de référence de noir à tous les éléments d'images d'une même ligne.

L'échantillonnage et la mémorisation du niveau de noir sont effectués, dans l'art antérieur, par un circuit électronique extérieur comprenant un interrupteur statique, par exemple un transistor de commutation, pour charger un condensateur de mémorisation de la tension de noir.

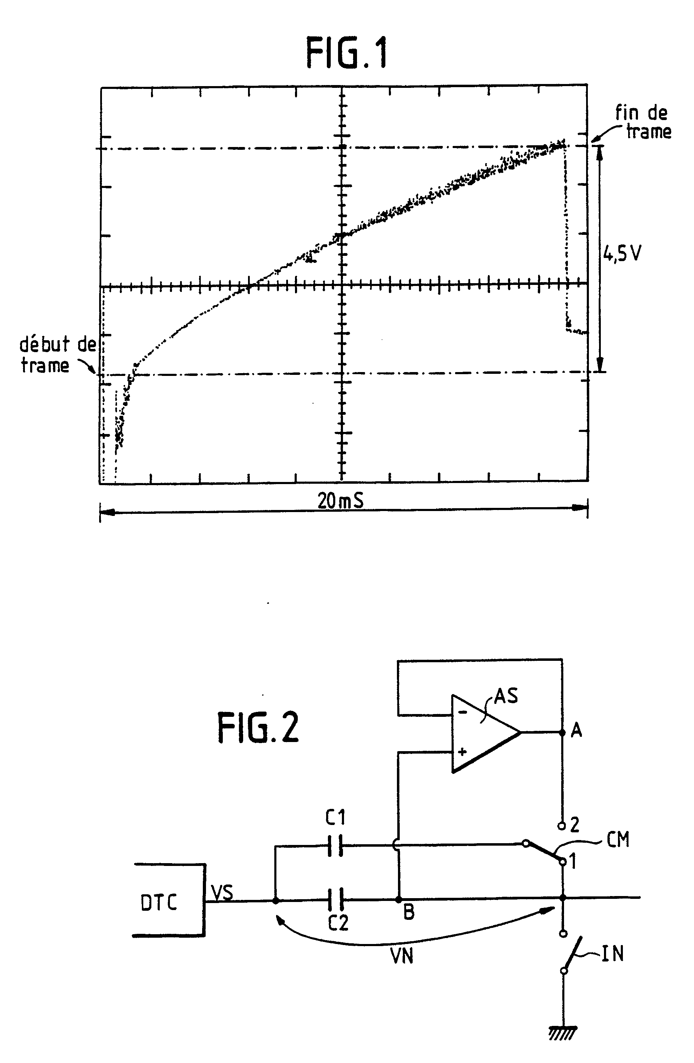

Cependant, pour un capteur DTC performant, destiné à fonctionner dans des conditions de faible luminosité et nécessitant un gain d'amplification du signal vidéo élevé, la variation du niveau de noir au cours d'une trame est très importante comme le montre la figure 1, où est représenté une vue sur un oscilloscope de la variation du niveau de référence de noir obtenue avec un capteur DTC pour lequel la durée d'une trame est égale à 20ms à une température de 90°C et après un gain d'amplification égal à 40.

La différence de niveau de noir entre le début et la fin d'une trame est égal à 4,5V dans cet exemple.

Pour compenser cette importante variation de la référence de noir, l'échantillonnage doit être effectué avec une petite constante de temps entre la fin d'une trame et le début de la trame suivante. Mais le bruit d'échantillonnage induit par le circuit électronique réalisant cet échantillonnage, dans ce cas, est très important pendant la lecture des lignes d'une même trame.

Pour minimiser le bruit d'échantillonnage au cours d'une trame, il faut une grande constante de temps, mais dans ce cas, la compensation de la différence de niveau de noir entre la fin d'une trame et le début de la trame suivante n'est pas suffisante.

Le but de la présente invention est de remédier à ces inconvénients et de réaliser un échantillonnage rapide avec une petite constante de temps pendant la période séparant deux trames consécutives, dite de "suppression de trame", pour ramener le plus rapidement possible le niveau de noir à la valeur correspondant au niveau de noir du début de la trame suivante, et de réaliser un échantillonnage lent avec une grande constante de temps pendant la période séparant la lecture de deux lignes consécutives, dite de "suppression de ligne" pour minimiser le bruit d'échantillonnage.

Pour compenser la variation d'un niveau de tension de référence dans un dispositif à transfert de charges, le procédé selon l'invention, consistant à échantillonner le signal de sortie du capteur d'images à des instants $t_N$ où la tension du signal correspond à la tension de référence de noir est caractérisé en ce qu'il consiste, pendant une période dite de suppression de trame, à augmenter la durée pendant laquelle la tension du signal de sortie du capteur (DTC) est égale à la tension de référence de noir en générant, en fin de chaque trame, après la lecture de toutes les lignes de la zone mémoire et pendant un temps égal au temps de lecture de plusieurs lignes supplémentaires, un signal de niveau égal à la tension de référence de noir des lignes du début de la trame suivante.

D'autres particularités et avantages de l'invention apparaîtront clairement dans la description suivante donnée à titre d'exemple non limitatif, et faite en regard des figures annexées :
- la figure 1, précitée, représente la variation du niveau de référence de noir au cours d'une trame,
- la figure 2, représente un exemple de dispositif à deux constantes de temps d'échantillonnage,
- la figure 3, montre l'organisation d'un capteur DTC à transfert de trame,
- la figure 4, représente un mode de réalisation de l'invention.

La figure 2, représente un exemple d'un dispositif à transfert de charges associé à un circuit électronique permettant de faire varier la constante de temps d'échantillonnage du niveau de référence de noir.

Ce circuit électronique comporte deux branches parallèles d'échantillonnage permettant d'une part, d'échantillonner le niveau de noir avec une première constante de temps pendant la période de suppression de ligne au cours d'une trame, et d'autre part, d'échantillonner le niveau de noir entre deux trames consécutives avec une seconde constante de temps, plus petite que la première.

Ce circuit électronique comporte un premier condensateur C1 de forte valeur, par exemple 10nF, et un deuxième condensateur C2 de valeur plus faible, par exemple 1nF, placé en parallèle avec le condensateur C1 par l'intermédiaire d'un commutateur CM fermé en position 1 pendant la période de suppression de ligne. Ces deux condensateurs C1 et C2 reçoivent, sur leur borne d'entrée commune, la tension du signal de sortie VS d'un capteur DTC.

A des instants donnés où la tension du signal correspond à la tension de noir VN, la borne de sortie commune aux deux condensateurs C1 et C2 est mise temporairement au potentiel de la masse par l'intermédiaire d'un interrupteur IN de façon à charger les condensateurs C1 et C2 au potentiel VN.

En fin de trame, le commutateur CM est fermé en position 2 pour échantillonner le niveau de noir pendant la période de suppression de trame. La borne de sortie du condensateur C1 n'est alors plus reliée à celle du condensateur C2 mais est reliée à la borne de sortie d'un amplificateur AS monté en suiveur, tel que l'entrée non inverseuse de l'amplificateur AS reçoit la tension de sortie du condensateur C2 de façon à ce que la tension aux bornes du condensateur C2 soit transmise au condensateur C1 et que cette tension ne soit pas modifiée lorsque ces deux condensateurs C1 et C2 seront de nouveau connectés en parallèle pendant la trame suivante. L'entrée inverseuse et la sortie de l'amplificateur AS sont reliées entre elles. La constante de temps d'échantillonnage du niveau de noir est déterminée par les condensateurs C1 et C2 pendant une trame et est proportionnelle à la somme des capacités respectives des deux condensateurs C1 et C2, tandis qu'entre deux trames, seul le condensateur C2 intervient et la constante de temps d'échantillonnage est proportionnelle à la capacité du condensateur C2.

Ce dispositif qui permet d'échantillonner le niveau de noir avec deux constantes de temps différentes pendant une trame et entre deux trames est difficile à mettre en oeuvre et alourdit le circuit de traitement du signal délivré par le capteur DTC en rajoutant d'une part, l'amplificateur suiveur AS pour charger ou décharger le condensateur C1 pendant l'échantillonnage du niveau de noir entre deux trames consécutives pour qu'il soit au même potentiel que le condensateur C2, et d'autre part un commutateur CM pour changer de constante de temps d'échantillonnage à chaque fin de trame et à chaque début de trame suivante.

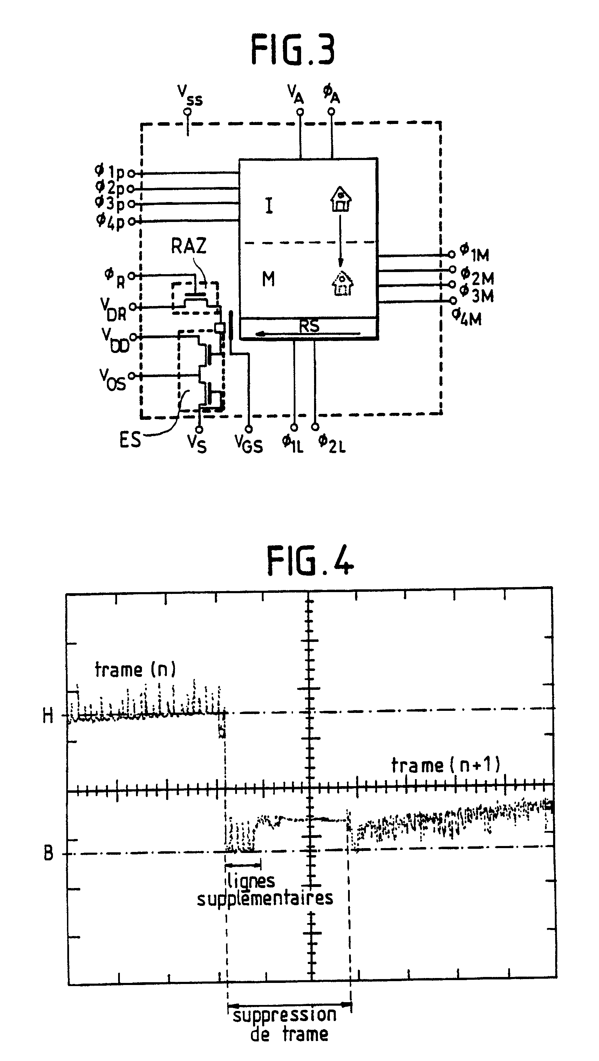

La figure 3 montre l'organisation d'un capteur DTC à transfert de trame. Un capteur DTC à transfert de trame comporte une zone image, I, et une zone mémoire, M, juxtaposées, un registre de sortie, RS, un étage de remise à zéro, RAZ, et un étage de sortie, ES. Les signaux de commande d'un capteur DTC sont généralement délivrés par un séquenceur de signaux logiques. Ces signaux logiques de commande, ou signaux d'horloge, servent notamment à réaliser le transfert des charges à l'intérieur du capteur d'images, la délivrance du signal de sortie à un rythme précis et en fonction d'un signal de synchronisation externe, les remises à zéro, .... La zone image, I, est composée d'éléments photosensibles, ou pixels, répartis, par exemple, sous forme d'une matrice à deux dimensions. Pendant la période d'exposition à la lumière, ou phase d'intégration, chaque pixel accumule une quantité de charges électriques proportionnelle à l'intensité lumineuse reçue. La période d'exposition est approximativement égale à la durée d'une trame.

A la fin de la période d'exposition, les charges électriques générées dans la zone image, I, sont transférées dans la zone mémoire, M, pendant la période de suppression de trame, c'est-à-dire entre la fin d'une trame et le début de la trame suivante. Lorsque toutes les charges ont été transférées, la zone image, I, retourne en phase d'intégration pour accumuler les charges correspondant à la trame suivante. Pendant cette nouvelle phase d'intégration et pendant la période de suppression de ligne, l'information contenue dans la zone mémoire, M, est transférée ligne par ligne dans un registre de sortie, au rythme du standard télévision ; le nombre d'impulsions d'horloge nécessaires à ce transfert est égal au nombre de lignes à transférer. Puis les charges contenues dans ce registre de sortie RS, sont transférées pixel par pixel dans un étage de sortie, ES, où elles sont lues, c'est-à-dire converties en niveau de tension.

Selon un mode de réalisation de l'invention, le capteur DTC est commandé de manière différente d'un capteur à mode de fonctionnement classique pour que la constante de temps d'échantillonnage du niveau de noir pendant la période de suppression de trame soit plus petite que la constante de temps d'échantillonnage du niveau de noir pendant la période de suppression de ligne.

La figure 4 montre une vue sur un oscilloscope du signal de sortie d'un capteur DTC, correspondant à ce mode de réalisation de l'invention.

Trois parties différentes sont à distinguer sur cette figure 4 : à gauche est représenté le signal de sortie du capteur DTC correspondant à la fin de la trame (n), la partie centrale correspond à la période de suppression de trame, et à droite, le signal correspond au début de la trame (n + 1). Les niveaux de noir correspondant aux dernières lignes de la trame (n) et aux premières lignes de la trame (n + 1) sont repérés, respectivement, par les niveaux haut, H, et bas, B. Pendant la période de suppression de trame, où seul le transfert des charges de la zone image, I, vers la zone mémoire, M, est effectué dans l'art antérieur, il y a un autre signal dont le niveau de noir est au niveau bas, B. Ce signal correspond à des lignes supplémentaires, lues après les lignes de la trame (n) et dont le niveau de noir est le même que les lignes du début de la trame (n + 1).

Lorsque toutes les lignes de la zone mémoire, M, du capteur DTC ont été transférées dans le registre de sortie, RS, et converties en tension, des lignes supplémentaires vides de charges sont lues à leur tour pendant la période de suppression de trame. Ces lignes sont noires et correspondent à un temps de stockage de 20 ms pour une trame de durée 20 ms dans la zone mémoire, M, du capteur DTC. Elles ont donc le même niveau d'obscurité que les références de noir des lignes de début de trame qui ont une durée de stockage de 20 ms dans la zone image, I, du capteur DTC. Il est alors possible d'échantillonner le signal de sortie du capteur DTC pendant toute la durée des lignes supplémentaires où la tension du signal correspond à la tension de noir du début de la trame suivante, de façon à compenser en fin de trame la variation du niveau d'obscurité au cours de cette trame.

Le nombre de lignes supplémentaires nécessaires pour compenser cette variation du niveau d'obscurité au cours d une trame, dépend de la constante de temps d'échantillonnage choisie et du gain d'amplification du signal vidéo en sortie du capteur DTC, car plus le gain d'amplification du signal vidéo est grand, plus la variation du niveau de noir au cours d'une trame est importante. Par exemple, pour un capteur DTC comportant 312 lignes, chacune ayant une durée de lecture de 52 $\mu$s et pour un temps d'échantillonnage du niveau de noir de 1 $\mu$s par ligne pendant la période de suppression de ligne, le temps d'échantillonnage total nécessaire pour compenser la variation du niveau de noir au cours d'une trame pendant la période de suppression trame est égal à 312 $\mu$s. Ce qui correspond à un nombre de lignes supplémentaires égal à 6. Généralement, le nombre d'impulsions d'horloge nécessaires pour lire le contenu de la zone mémoire, M, est égal au nombre de lignes que contient cette zone mémoire, M. Aussi, pour lire les lignes supplémentaires lorsque la zone mémoire, M, est vide de charges, il faut programmer le séquenceur envoyant las signaux de commande au DTC de façon à ce que, d'une part, le nombre d'impulsions d'horloge permettant le transfert des charges de la zone mémoire,M, vers le registre de sortie, RS, soit augmenté du nombre de lignes supplémentaires souhaitées et d'autre part, à ce que le nombre d'impulsions d'horloge nécessaires à la lecture du registre de sortie, RS, soit augmenté de façon à lire tous les pixels supplémentaires, correspondant aux lignes supplémentaires. Par exemple, pour 6 lignes supplémentaires le nombre d'impulsions d'horloge supplémentaires est égal à 6 pour le transfert des charges de la zone mémoire vers le registre de sortie, et est égal à 6 multiplié par "le nombre de pixels par ligne", pour la lecture du registre de sortie.

L'invention n'est pas limitée aux exemples de réalisation précisément décrits et représentés. Pour compenser la variation du niveau de tension de référence dans un capteur d'images du type dispositif à transfert de charges DTC, il suffit de faire varier le rapport cyclique de la commande d'échantillonnage de façon à échantillonner le signal plus longtemps et/ou plus souvent, ou de faire varier la valeur de la capacité d'un condensateur de mémorisation de la tension de référence.

**Revendications**

1. Procédé pour compenser la variation d'un niveau de tension de référence dans un capteur d'images du type dispositif à transfert de charges (DTC) comportant une zone image (1), une zone mémoire (M), un registre de sortie (RS) et un étage de sortie (ES), consistant à échantillonner le signal de sortie du capteur (DTC) à des instants $t_N$ où la tension du signal correspond à la tension de référence de noir, caractérisé en ce qu'il consiste :
- pendant une période dite de suppression de trame, à augmenter la durée pendant laquelle la tension du signal de sortie du capteur (DTC) est égale à la tension de référence de noir en générant, en fin de chaque trame, après la lecture de toutes les lignes de la zone mémoire et pendant un temps égal au temps de lecture de plusieurs lignes supplémentaires, un signal de niveau égal à la tension de référence de noir des lignes du début de la trame suivante ;
- et à faire varier le rapport cyclique de la commande d'échantillonnage de façon à échantillonner le signal plus longtemps et/ou plus souvent.

2. Procédé selon la revendication 1, caractérisé en ce que, le transfert des charges à l'intérieur du capteur (DTC) étant rythmé par des signaux d'horloges, pour générer le signal de niveau égal à la tension de référence de noir des lignes du début de la trame suivante, des signaux de commande, ou impulsions d'horloge, supplémentaires sont envoyés au capteur (DTC), pour que le transfert des charges électriques de la zone mémoire (M) vers le registre de sortie (RS) continue à être effectué même lorsque la zone mémoire (M) est vide, le nombre de signaux d'horloge supplémentaires étant égal au nombre de lignes supplémentaires.

3. Dispositif pour la mise en oeuvre du procédé selon l'une des revendications précédentes, caractérisé en ce qu'il comporte un dispositif à transfert de charges (DTC) associé à des moyens de commande générant les impulsions d'horloge nécessaires au transfert des charges à l'intérieur du capteur (DTC) et au transfert des lignes supplémentaires de la zone mémoire (M) vers le registre de sortie (RS) et du registre de sortie (RS) vers l'étage de sortie (ES) du capteur (DTC).

# FIG.1

fin de
trame

4,5 V

début de
trame

20 mS

# FIG.2

# FIG.3

# FIG.4

**Office européen des brevets**

# RAPPORT DE RECHERCHE EUROPEENNE

Numéro de la demande

**EP 90 40 2885**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 115 196 (SONY) <br> * Page 2, ligne 14 - page 3, ligne 29 * <br> – – – | 1-3 | H 04 N <br> 5/18 <br> H 04 N 5/217 |
| Y | US-A-4 589 025 (MONAHAN et al.) <br> * Colonne 5, ligne 55 - colonne 7, ligne 13; figures 3a,3b * <br> – – – | 1-3 | |
| A | US-A-4 580 170 (LEVINE) <br> * Colonne 2, lignes 49-57; figure 1 * <br> – – – – – | 1 | |

| | DOMAINES TECHNIQUES RECHERCHES (Int. Cl.5) |
|---|---|
| | H 04 N |

Le présent rapport de recherche a été établi pour toutes les revendications

| Lieu de la recherche | Date d'achèvement de la recherche | Examinateur |
|---|---|---|
| La Haye | 24 janvier 91 | BEQUET T.P. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant